# EUROPEAN PATENT APPLICATION

(11) **EP 1 389 414 A2**
(43) Date of publication of application: **18.02.2004**
(21) Application number: 03018426.1
(22) Date of filing: 14.08.2003
(51) Int. Cl.: A01D 90/02

(54) **Improved loading elevator**

(30) Priority: 14.08.2002 IL 15127102
(71) Applicant: Lachish Industries LTD, Sderot 80100 (IL)
(72) Inventor: Hadar, Gil, 15225 Moshav Yavniel (IL)
(74) Representative: Gervasi, Gemma, Dr.

(57) **Abstract**

The invention relates to hay, long fiber material straw, and the like handling and transportation, the invention provides an improved elevator for loading hay, straw, long fiber material and the like, the elevator being useful in an agricultural vehicle designed for collecting, mixing and distributing fodder for livestock.

The loading elevator being particularly useful for mounting on a fodder loading, transporting, mixing and distribution vehicle for feeding livestock by distributing an even flow of mixed fodder into feeding troughs aligned with the direction of travel of the vehicle, the conveyor improvement comprising the addition of a feeding apparatus supported above the loading elevator, the apparatus comprising a power driven conveyor belt, the lower side of which is arranged to move in the same direction as the upper part of the loading elevator, the apparatus being provided with projecting prongs, being arranged to assist the collection of hay, straw from a haystack and the forcing of hay into the loading elevator to increase the quantity of hay collected and raised by the loading elevator in a fixed time period.

## Description

### FIELD AND BACKGROUND OF THE INVENTION

The present invention relates to hay, long fiber material straw, and the like handling and transportation.

More particularly, the invention provides an improved elevator for loading hay, straw, long fiber material and the like, the elevator being useful in an agricultural vehicle designed for collecting, mixing and distributing fodder for livestock.

Loose hay or straw is a lightweight large volume product, and so isusually compressed into bales, whereafter it is handled by appropriate machinery. Hay bale handling machinery is seen for example in US Patents nos. 3,949,706, 4,051,963 4,773,806 and 5,441,377.

Fodder used to feed livestock comprises of several ingredients, hay or straw being but one of them. The various fodder ingredients are typically collected by means of a chopper connected to a sloped elevator which is installed on a special-purpose motorized vehicle, which also carries a fodder mixing bin. The vehicle is used for loading, transporting, mixing and distribution, and for brevity will be referred to as the LTMD vehicle. When the fodder is mixed and is ready for consumption, the LTMD vehicle may be driven in a line adjacent to at least one feeding trough aligned with the direction of travel of LTMD vehicle. A discharge device is activated to deliver an even quantity of fodder into the feeding trough(s) while the LTMD vehicle is in motion. A tractor-drawn version of a LTMD vehicle is seen in US Patent 6,200,017 B1 to van den Berg.

While there is little difficulty in collecting and loading other fodder ingredients, hay, straw grass and the like, have been found difficult to load by means of the same conveyor used for the other fodder ingredients. The hay or the like tends to fall off the elevator, and even when collected thereby the hay is subject to dispersal even by a light wind. Consequently the operator's time is wasted and considerable quantities of material are lost.

### OBJECTS OF THE INVENTION

It is therefore one of the objects of the present invention to obviate the disadvantages of prior art elevators and to provide an apparatus which can be added to a conventional elevator used for loading hay, straw and other fodder ingredients.

The present invention achieves the above object by providing an improved loading elevator used for the loading of hay and other feed ingredients of fodder, said loading elevator being particularly useful for mounting on a fodder loading, transporting, mixing and distribution vehicle for feeding livestock by distributing an even flow of mixed fodder into feeding troughs aligned with the direction of travel of said vehicle, the conveyor improvement comprising the addition of a feeding apparatus supported above said loading elevator, said apparatus comprising a power driven conveyor belt, the lower side of which is arranged to move in the same direction as the upper part of said loading elevator, said apparatus being provided with at least one group of projecting prongs, said prongs being arranged to assist the collection of hay, straw from a haystack and the forcing of hay into said loading elevator to increase the quantity of hay collected and raised by said loading elevator in a fixed time period.

In a preferred embodiment of the present invention there is provided an improved loading elevator, wherein said prongs are arranged in two spaced-apart latitudinal lines, or more.

In a most preferred embodiment of the present invention there is provided an improved loading elevator wherein said prongs are mounted on friction clamped revolvable holders which allow said prongs to revolve about the axis of said holders to avoid damage to said prongs if said prongs come into engagement with a solid body resistant to movement.

Yet further embodiments of the invention will be described hereinafter.

### SHORT SDESCRIPTION OF THE DRAWINGS

It will thus be realized that the novel apparatus of the present invention serves to improve and save straw, hay loading time and to reduce losses caused by winds.

The invention will now be described further with reference to the accompanying drawings, which represent by example preferred embodiments of the invention. Structural details are shown only as far as necessary for a fundamental understanding thereof. The described examples, together with the drawings, will make apparent to those skilled in the art how further forms of the invention may be realized.

In the drawings:
FIG. 1 is a perspective view of a preferred embodiment of the elevator including the apparatus according to the invention;
FIG. 2 is a view of a LTMD vehicle using said elevator;
FIG. 3 is a side sectional illustration of the elevator and the apparatus according to the invention.
FIG. 4 is a perspective view of the apparatus according to the invention;
FIG. 5 is a view of a side view of the apparatus;
FIG. 6 is an end view of a preferred embodiment of the invention;
   and
FIG. 7 is an end view of a further preferred embodiment of the prongs.

### FULL DESCRIPTION OF THE INVENTION

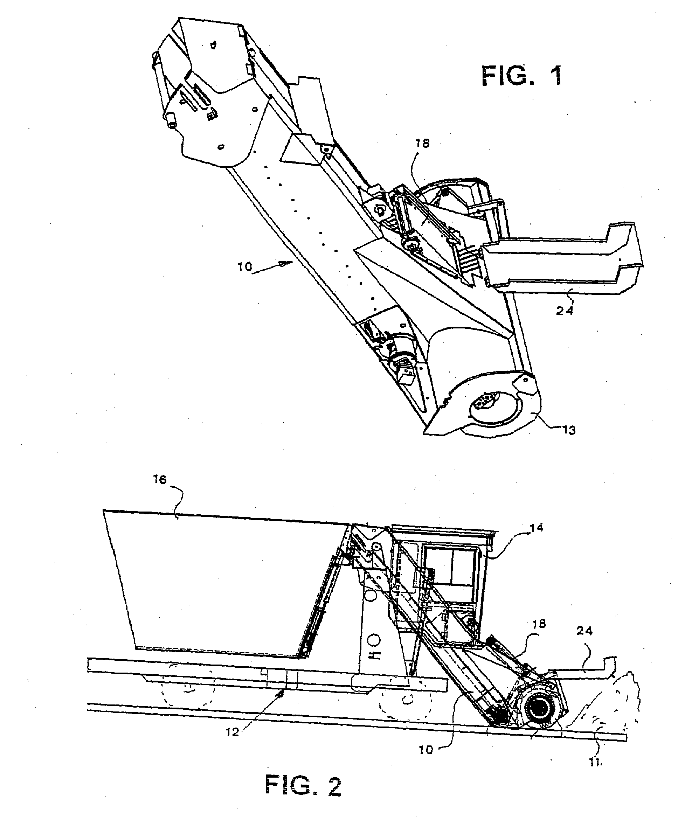

There is seen in FIG. 1 an improved fodder loading elevator 10 used for the loading of hay and other feed ingredients of fodder. The elevator 10 collects fodder ingredients by means of a chopper 13 mounted at its lower part. The fodder material is raised by a flat rubber belt which may be studded with projecting teeth.

The improved elevator 10 is particularly suited for use in combination with a the transporting, mixing and distribution (LTMD) vehicle 12, seen in FIG.2.

The LTDM vehicle 12 shown in the figure has a drivers cab 14, and is self-propelled. The large receptacle carried on the vehicle 12 is a fodder mixing device 16.

The LTDM vehicle 12 is used for feeding livestock by distributing an even flow of mixed fodder into feeding troughs aligned with the direction of travel of the vehicle.

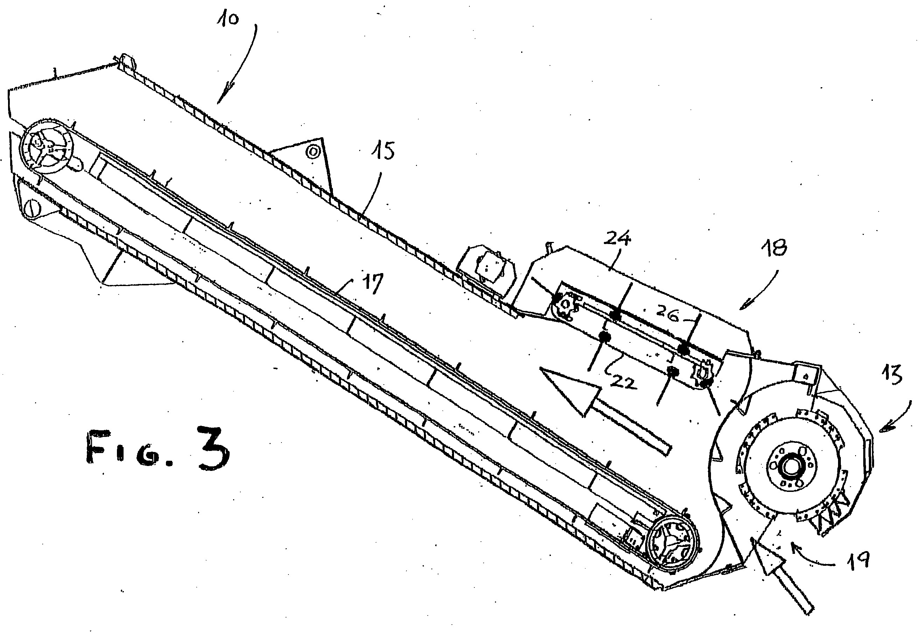

As can be seen in Fig. 3 the loading elevator 10 comprises, a housing 15 in which travels conveyor belt 17, and the chopper 13 having an opening 19 adopted to collect the fodder.

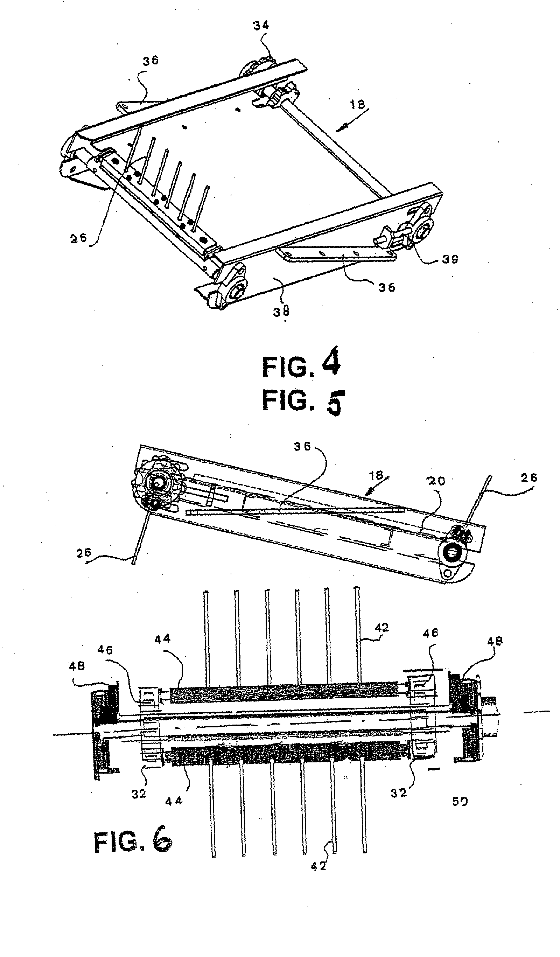

The loading elevator improvement comprising the addition of a hay feeding apparatus 18, is seen in FIGS. 4 and 5. The apparatus is supported above the loading elevator, and includes a power driven conveyor belt 20, the lower side 22 of which is arranged to move in the same direction as the upper part of conveyor belt 17 of the loading elevator. A hinged cover 24 for the apparatus 18 is seen in its open position in FIG. 1.

The embodiment of the apparatus 18 seen in the figure is provided with two groups of projecting prongs 26, to form a kinde of hayfork, and is arranged to assist the collection of hay 11 from a bale 28 or from a loose heap 11. The prongs 26 are driven by the flat rubber conveyor belt 20 as in FIG.5 or by a pair of conveyor chains 32 seen in FIG 6. The apparatus 18 receives power from the chain-wheel 34.

The apparatus 18 is mounted onto the loading elevator 10 by means of the two mounting strips 36 supporting the structure 38 of the apparatus 18.

The revolving movement of conveyor belt 20 and the prongs 26 force the straw, hay of the like into the loading elevator 10. Accordingly the apparatus 18 improves the forcing of hay into the loading elevator 10 to increase the quantity of hay collected and raised by the loading elevator in a fixed time period.

With reference to the rest of the figures, similar reference numerals have been used to identify similar parts.

Referring now to FIG.6, there is seen an embodiment 40 of the apparatus wherein the prongs 42 are mounted on friction clamped revolvable holders 44. The holders 44 allow the prongs 42 to revolve about the axis of the holders 44 to avoid damage to the prongs 42 if the prongs 42 come into engagement with a solid body resistant to movement. In the present embodiment the holders 44 are driven by a pair of conveyor chains 32 guided by sprockets 46. A pair of conventional bearings 48 support each shaft 50.

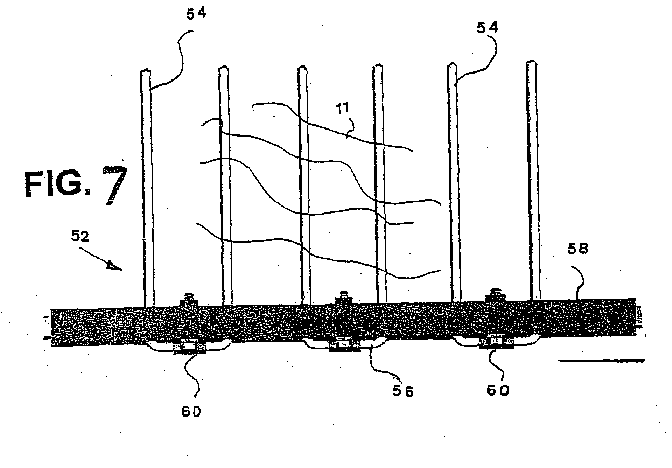

FIG.7 illustrates a further embodiment 52 of the apparatus for the improved loading elevator 10. The prongs 54 are substantially U formed, the base 56 of the U being used for removably clamping the prongs 54 to the holder 58. The arms of the U form a pair of prongs 54 which participate in collecting the hay 11 and in pressing the hay onto the conveyor elevator. Thus a broken prong can be quickly replaced by loosening the clamps 60.

The scope of the described invention is intended to include all embodiments coming within the meaning of the following claims. The foregoing examples illustrate useful forms of the invention, but are not to be considered as limiting its scope, as those skilled in the art will readily be aware that additional variants and modifications of the invention can be formulated without departing from the meaning of the following claims.

## Claims

1. An improved loading elevator used for the loading straw of hay and other feed ingredients of fodder, said loading elevator being particularly useful for a fodder loading, transporting, mixing and distribution vehicle for feeding livestock by distributing an even flow of mixed fodder into feeding troughs aligned with the direction of travel of said vehicle, the conveyor improvement comprising the addition of a hay feeding apparatus supported above said loading elevator, said apparatus comprising a power driven conveyor belt, the lower side of which is arranged to move in the same direction as the upper part of said loading elevator, said apparatus being provided with at least one group of projecting prongs, said prongs being arranged to force the hay into said loading elevator to increase the quantity of hay collected and raised by said loading elevator in a fixed time period.

2. The improved loading elevator as claimed in claim 1, wherein said prongs are arranged in two spaced-apart latitudinal lines.

3. The improved loading elevator as claimed in claim 1, wherein said prongs are mounted on friction clamped revolvable holders which allow said prongs to revolve about the axis of said holders to avoid damage to said prongs if said prongs come into engagement with a solid body resistant to movement.

4. The improved loading elevator as claimed in claim 3, wherein said prongs are substantially U formed, the base of said U being used for removably clamping said U to said holder and the arms of said U forming a pair of prongs.
